# EUROPEAN PATENT APPLICATION

(11) **EP 1 071 062 A2**
(43) Date of publication of application: **24.01.2001**
(21) Application number: 00305698.3
(22) Date of filing: 06.07.2000
(51) Int. Cl.: G09B 5/14, G09B 19/00

(54) **Method and system for creating customized exercise routines**

(30) Priority: 23.07.1999 US 360225
(71) Applicant: PeakCare LLC, San Diego, California 92130 (US)
(72) Inventor: Leeds, Gary, Rancho Santa Fe, California 92067 (US)
(74) Representative: Thomas, Philip John Duval

(57) **Abstract**

A method for creating a customized visual presentation of a physical therapy routine includes an initial step of evaluating the capability of the individual for performing the routine. Once the evaluation is complete, the individual is categorized according to the evaluated performance capability. Based on the category of the individual, the physical therapist identifies a sequence of physical exercises for the individual which defines the individualized physical therapy routine. The therapist then accesses an archives which includes a plurality of digital excerpts that each demonstrate the performance of a particular physical exercise. The physical therapist selectively retrieves digital excerpts from the archives which visually demonstrate the physical exercises that will make up the routine. These digital excerpts are edited appropriately and compiled into a videocassette tape and provided to the individual.

## Description

### FIELD OF THE INVENTION

The present invention pertains generally to instructional aids for work and exercise routines. More particularly, the present invention pertains to a method and a system for using an internet type communication system to automatically create a visual presentation of a work and exercise routine for an individual. The present invention, is particularly, but not exclusively, useful as an automated method for creating a customized visual presentation of a physical therapy routine that is tailored to the specific physical characteristics of the individual and that is commensurate with the capabilities of the individual.

### BACKGROUND OF THE INVENTION

Physical therapy routines for individuals are well known in the prior art and typically consist of a series of physical exercises. They are usually prescribed and assigned to an individual by physical therapists for rehabilitation from a disease and/or injury. When determining a proper routine, the physical therapist or exercising instructor also needs to account for individual factors such as age, fitness level, and medical history, in addition to the type of diseases or injury, the individual may be experiencing.

Once the physical therapy routine or work routine is prescribed, the physical therapist or exercise instructor must make sure the individual understands how to accomplish the physical exercises in the routine. To do this, the physical therapist or exercise instructor will typically demonstrate the exercises to the individual and provide written instructions for subsequent reference. But this can be an inefficient use of the time of the physical therapist, particularly if the routine is lengthy and involved. Further, even though the individual may initially understand the entire routine, the individual may eventually forget how to correctly perform certain exercises in the routine over time.

Standardized videotapes and other well known technologies for visual presentations such as CD Rom and DVD that provide a visual presentation of physical exercises for muscle tone and weight reduction are known in the prior art. These standardized visual presentations, however, typically assume that the person viewing the visual presentation and performing the exercises is a completely healthy person. Therefore, they do not account for the age, fitness level or physical malady of the individual that requires therapy. Moreover, for various reasons, other physical activities such as occupational therapy, athletic training programs and yoga exercises are subject to these same concerns.

In light of the above, it is an object of the present invention to provide a method for creating a visual presentation of a work, exercise or physical therapy routine for an individual that customizes the visual presentation according to the specific performance capabilities of the individual. It is another object of the present invention to provide a method for creating a visual presentation of a work, exercise or physical therapy routine that is not based on assumptions concerning the individual's health and fitness level. Yet another object of the present invention is to provide a method for creating a customized visual presentation of a work, exercise or physical therapy routine, athletic training program or yoga exercise that selectively retrieves a plurality of digital excerpts of specific exercises from an archives and collates these excerpts to demonstrate the routine. It is another object of the present invention to provide a method for creating a customized visual presentation of a work, exercise or physical therapy routine that is effectively easy to operate, relatively simple to manufacture, and comparatively cost effective.

### SUMMARY OF THE PREFERRED EMBODIMENTS

A method for creating a customized visual presentation of a work, training exercise, occupational or physical therapy routine in accordance with the present invention includes the initial step of evaluating the capabilities of the individual for performing the routine. Because the performance capabilities of individuals will vary greatly, this evaluation typically needs to be made by a trainer, a physical therapist or some other professional. Further, the trainer or physical therapist will normally require information from other sources. Specifically, in many instances, it may be necessary for the anatomical limitations of the individual to be diagnosed by a doctor and then provided to the trainer or physical therapist in the form of a written prescription. Further, the individuals themselves can provide administrative information, such as age, injury history and their general physical fitness history. With all of this data, the physical therapist or trainer evaluates the capability of the individual for performing the necessary physical therapy routine and establishes a category for the individual that is commensurate with his/her performance capability. Specifically, the trainer or physical therapist chooses a particular category from a group of categories that generally include the following: orthopedic, pediatric, geriatric and protocols.

Within each category mentioned above, there are a variety of specific exercises or tasks which may be grouped into routines that are to be performed by the individual. Furthermore, the degree of difficulty for each physical exercise in the routine can be adjusted by the trainer or physical therapist to match the activity level of the individual. More specifically, the trainer or physical therapist can task the individual to accomplish the exercises or tasks while using a specified amount of weight resistance (i.e. lifting weights). On the other hand, if a stretching exercise is involved, the physical therapist may specify a time required to hold the stretching position. Additionally, a specified number of repetitions for each exercise can be assigned. By assigning weights, hold time and number of repetitions for each specific exercise, the person setting up the program is able to customize the physical therapy routine for the individual in a manner that accounts for the unique characteristics of the individual.

In accordance with the present invention, once the sequence of exercises for a routine are identified, the trainer or physical therapist selectively retrieves digitized digital excerpts of the identified exercises from an archival database. As intended for the present invention, the archival database is accessible through a communications system, such as the internet. In any event, each digital excerpt that is retrieved from the archives will visually demonstrate the particular anatomical movements, positions, and activities that are involved in performing a respective physical exercise. For ease of retrieval, the digital excerpts are arranged in the archive database according to the same categories that are used for characterizing the individual, namely: orthopedic, pediatric, geriatric and protocols. For example, consider the geriatric category of the archives. For each exercise that is assigned to a geriatric individual, a respective digital excerpt that demonstrates the exercise is selected from the geriatric category in the archives. Similarly, digital excerpts of exercises that can be accomplished by individuals in the pediatric, orthopedic, and protocols categories can be selected from the respective categories in the archives.

After the digital excerpts of the identified exercises have been retrieved from the archives, the digital excerpts can be sequenced in the order the therapist desires the exercises to be accomplished by the individual. The excerpts are then compiled into a visual presentation, typically in the form of a videotape. In the preferred embodiment of the present invention, the physical therapist can preview each digital excerpt to decide whether the excerpt is to be included in the videotape. Then, after the digital excerpts are compiled as a routine, the physical therapist can review the entire routine and remove a digital excerpt from the visual presentation, as desired. In this manner, the customized visual presentation of a work routine can be altered according to the needs of the individual. Importantly, the selection of excerpts, the retrieval of the selected excerpts, as well as the redaction and the compilation of the retrieved excerpts can all be done automatically.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which the Figure is a flow chart showing the interaction and cooperation of steps according to the methods of the present invention.

### DESCRIPTION OF THE PREFERRED EMBODIMENT

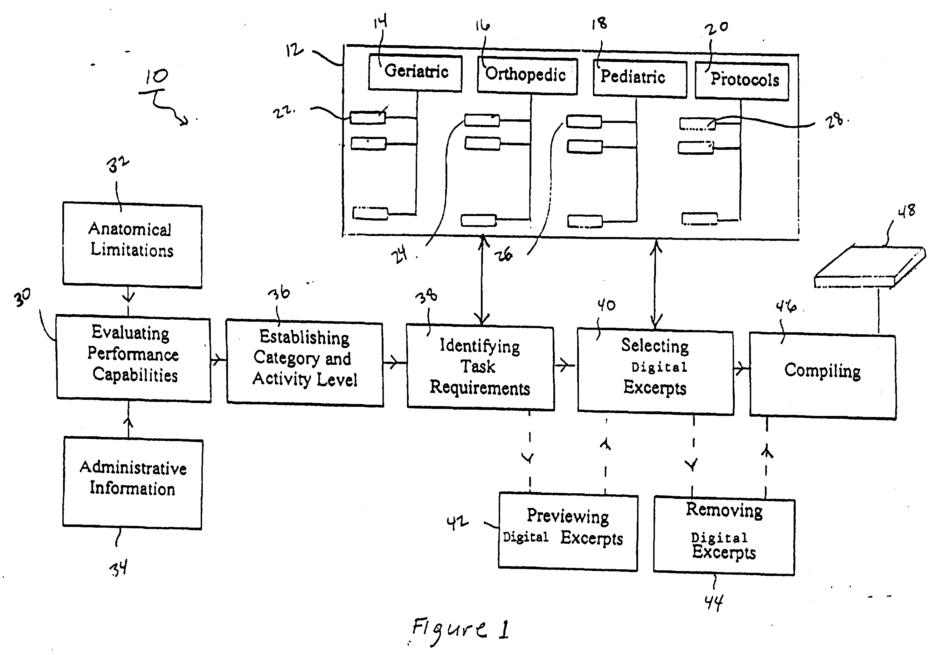

Referring to the Figure, a schematic block diagram for creating a customized visual presentation of a work routine for an individual in accordance with the methods of the present invention is shown and is generally designated 10. For purposes of discussion, the methods described by block diagram 10 pertain to a physical therapy routine, and the methods are accomplished by a physical therapist. It is to be appreciated, however, that other types of work and exercise routines are also contemplated for use with the present invention.

To accomplish the methods of the present invention, the physical therapist obtains access to an archives 12 of task requirements. More specifically, the archives 12 will typically include a vast number of individual digitized excerpts and the archives 12 will be accessed over the internet. For the present invention, the task requirements are arranged in the archives 12 according to at least four separate categories. These categories can include: geriatric, orthopedic, pediatric and protocols for a specific injury. In the Figure these categories are shown by respective boxes 14, 16, 18 and 20. Further, under each category, many different digital excerpts are provided which each visually demonstrate a particular task requirement in that category. For example, as shown in the Figure, under the geriatric category (box 14), a series of digitized digital excerpts 22 are included. In accordance with the present invention, each of these digital excerpts 22 visually demonstrates the anatomical movements and other activities involved in the performance of a respective task requirement. For example, a visual demonstration of ankle circles for the physical therapy of a geriatric individual would be one such task requirement. Similarly, boxes 24 represent digital excerpts which visually demonstrate the performance of task requirements for an individual in the orthopedic category (box 16). Further, boxes 26 in the Figure represent digital excerpts that demonstrate the performance of physical exercises that may be used by a pediatric individual. Under the protocols category, the digital excerpts represented by boxes 28 demonstrate the performance of task requirements that may be used for rehabilitation from a specific injury according to the rehabilitation protocol for that specific injury.

For the methods of the present invention, the Figure shows that an initial step in preparing a visual presentation 48, is the art of evaluating the performance capabilities of the individual for performing a work (block 30). To do this, the anatomical limitations of the individual must be considered as shown by block 32. Specifically, any significant anatomical limitations of the patient can be provided to the therapist by a doctor in the form of a written prescription. Additionally, the individual can also provide administrative information such as age, gender, medical history, and previous experience in performing work routines to the physical therapist (block 34). Using all of this information, the performance capabilities of the individual for performing the physical therapy routine are then determined.

Once the capability of the individual for performing a physical therapy routine is determined, a category for the individual commensurate with the performance capabilities of the individual is established, as shown by block 36 in the Figure. More specifically, as shown in the Figure, the individual is categorized as geriatric, orthopedic, pediatric, or according to a protocol for a specific injury. It is to be noted that the archives 12, as discussed above, is arranged according to the same categories that can be assigned to the individual. This is done for ease of retrieval of the digital excerpts 22 from the archives 12. Recall, however, that within each category, the activity level of the individual varies greatly from individual to individual. Thus, the physical therapist also establishes an activity level for the individual, as also shown in block 36.

Once the therapist has identified the category and the activity level of the individual, the therapist obtains access to the archives 12 through the provided communications network, e.g. the internet. In the Archives 12, the therapist then identifies the specific physical exercises (excerpts 22, 24, 26) that are required for accomplishing the physical therapy routine, as indicated by (box 38). In accordance with the present invention, and as indicated in the Figure, the physical exercises to be performed by the individual are identified based on the category of the individual. The activity level of the individual is then used by the physical therapist to customize the exercises to the individual (box 40). This tailoring, or customizing, is done by assigning a weight value, a number of repetitions and a hold time for each physical exercise that is visually presented in an excerpt 22, 24, 26. Stated differently, for each physical exercise, the physical therapist can require a specific manner for performance of each movement in the exercise. This can mean a certain amount of weight resistance (i.e. lifting weights). In a like manner, for a physical exercise that involves stretching, the physical therapist can assign a hold time. In either case, the number of repetitions in a set of exercises can be established.

For the methods of the present invention, once the task requirements that define the physical therapy routine have been identified and customized, digital excerpts 22 that demonstrate the performance of the identified task requirements are electronically retrieved from the archives 12, (box 40). As shown by block 42 in the Figure, the physical therapist has the option of previewing the digital excerpts 22 prior to the selection of the excerpts in order, to ensure the correctness and appropriateness of the digital excerpts. After retrieval, the physical therapist sequences the digital excerpts 22 in the order in which the therapist desires the patient to perform the exercises. In addition, the physical therapist has the option of selectively removing certain excerpts after the selection of the digital excerpts, as indicated by box 38.

As the excerpts 22 that demonstrate the assigned physical therapy routine are selectively retrieved from the archives 12, they are sequenced and automatically compiled into a useable format in a manner well known in the prior art, as indicated by block 46 in the Figure. For the present invention, all of the activity in preparing and compiling the visual presentation 48 can be done automatically and is preferably accomplished by the physical therapist at an interactive Internet website (not shown), or, alternatively, by computer software (not shown). Once digital excerpts 22 have been compiled, the result is a customized visual presentation 48 of the routine for use by the individual. In the preferred embodiment of the invention, the customized visual presentation 48 is a videocassette tape.

While the particular Method and System for Creating Customized Exercise Routines as herein shown and disclosed in detail is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. A method for creating a customized visual presentation of a work routine for an individual which comprises the steps of:
evaluating the performance capabilities of the individual;
establishing a category and an activity level for the individual, the category and activity level being commensurate with the performance capabilities of the individual;
identifying task requirements for the work routine, the task requirements being commensurate with the category and the activity level;
selecting prepared digital excerpts of the task requirements for incorporation into the work routine; and
automatically compiling a specified sequence of the selected digital excerpts for creation of the customized visual presentation.

2. A method as recited in claim 1 wherein said selecting step is accomplished over the internet.

3. A method as recited in claim 1 wherein the category of the individual is chosen from the group of categories consisting of geriatric, orthopedic, pediatric and protocols.

4. A method as recited in claim 3 wherein said selecting step is accomplished by using an archives of prepared excerpts, said archives being categorized according to said group of categories.

5. A method as recited in claim 1 wherein the identifying step is accomplished by using the activity level of the individual to determine a number of sets and a number of repetitions for each said set for performing each respective task.

6. A method as recited in claim 5 wherein the identifying step is further accomplished by using the activity level of the individual to determine a hold time and a weight value for performing each respective task.

7. A method as recited in claim 1 wherein each digital excerpt includes a visual demonstration of anatomical movements and activities involved in performing a particular task.

8. A method as recited in claim 1 further comprising the step of previewing a digital excerpt prior to the selecting step.

9. A method as recited in claim 1 further comprising the step of removing a digital excerpt after the selecting step.

10. A method as recited in claim 1 wherein said work routine is a physical therapy routine.

11. A method as recited in claim 10 wherein each task requirement is a physical exercise.

12. A method according to claim 1 further including the step of delivering said sequence of selected digital excerpts over a transmission medium to a display device.

13. A method according to claim 1 further including the step of creating a customized visual presentation product by recording said sequence of selected digital excerpts onto a recording medium.

14. A method for creating a customized visual presentation product for displaying a work routine for an individual, the method comprising the steps of:
evaluating performance capabilities of the individual;
establishing a category and an activity level for the individual, the category and activity level being commensurate with the performance capabilities of the individual;
identifying task requirements for the work routine, the task requirements being commensurate with the category and the activity level;
selecting prepared digital excerpts of the task requirements for incorporation into the work routine;
automatically compiling a specified sequence of the selected digital excerpts; and
creating said customized visual presentation product by recording said sequence of selected digital excerpts onto a recording medium.

15. Apparatus for creating a customized visual presentation of a work routine for an individual based on an assessed category and activity level for the individual which comprises:
an archives including a plurality of prepared digital excerpts, each said digital excerpt visually demonstrating a respective task requirement;
a means for automatically selecting said task requirements over an internet system for incorporation into said work routine, said work routine being commensurate with said category and said activity level of the individual; and
a compiler means for automatically sequencing said task requirements of said work routine from said selecting means and for automatically selectively retrieving said digital excerpts from said archives to visually demonstrate said work routine and to create said visual presentation.

16. Apparatus as recited in claim 15 further comprising a means for evaluating a performance capability of the individual for accomplishing said work routine, said evaluating means being used to assign said category and said activity level to the individual according to said performance capability.

17. Apparatus as recited in claim 15 wherein said work routine is a physical therapy routine.

18. Apparatus as recited in claim 15 wherein said task requirement is a physical exercise.

19. Apparatus as recited in claim 16 wherein each said physical exercise has a hold time and a weight value, said hold time and said weight value being assigned by a physical therapist.

20. Apparatus as recited in claim 15 wherein said category of the individual is chosen from the group consisting of geriatric, orthopedic, pediatric and protocols and wherein said archives is categorized according to said group.

21. Apparatus as recited in claim 15 wherein said compiler is a computer.

22. Apparatus as recited in claim 15 further including means for creating a customized visual presentation product by recording said retrieved digital excerpts onto a recording medium.

23. Apparatus for creating a customized visual presentation for showing a work routine for an individual based on an assessed category and activity level for the individual, the apparatus comprising:
an archive including a plurality of prepared digital excerpts, each said digital excerpt visually demonstrating a respective task requirement;
means for automatically selecting said task requirements for incorporation into said work routine, said work routine being commensurate with said category and said activity level of the individual;
compiler means for automatically sequencing said task requirements of said work routine from said selecting means and for automatically selectively retrieving said digital excerpts from said archives; and
means for transmitting said sequence of digital excerpts to a visual display device or to a recording medium.
